# FASCICULE DE BREVET EUROPEEN

(11) **EP 3 780 244 B1**
(45) Date de publication et mention de la délivrance du brevet: **02.11.2022**
(21) Numéro de dépôt: 20020347.9
(22) Date de dépôt: 30.07.2020
(51) Int. Cl.: H01M 10/26, H01M 4/24, H01M 4/62

(54) **GÉNÉRATEURS ÉLECTROCHIMIQUES SECONDAIRES ALCALINS À ANODE DE ZINC**
ALKALISCHE SEKUNDÄRE ELEKTROCHEMISCHE GENERATOREN MIT EINER ZINKANODE
ALKALINE SECONDARY ELECTROCHEMICAL GENERATORS WITH A ZINC ANODE

(30) Priorité: 09.08.2019 FR 1909115
(43) Date de publication de la demande: 17.02.2021
(73) Titulaire: SUNERGY, 93110 Rosny-sous-Bois (FR)
(72) Inventeur: FOURGEOT, Fabrice, 94120 Fontenay-sous-Bois (FR)
(74) Mandataire: Stona, Daniel

(56) Documents cités:
- EP-A1- 1 024 545
- FR-A1- 2 214 977
- FR-A1- 2 630 862
- FR-A1- 2 828 336

## Description

La présente invention concerne le domaine des générateurs électrochimiques alcalins et plus particulièrement celui des accumulateurs.

Elle est spécialement relative aux générateurs secondaires à anode de zinc tels que nickel-zinc, zinc-dioxyde de manganèse, argent-zinc, zinc-air, ainsi que ceux comportant une cathode totalement soluble ou partiellement soluble tels que zinc-iode, zinc-brome, zinc-ferricyanure, Zn-oxyde de manganèse et est destinée à obtenir de l'électrode de zinc un nombre élevé de cycles.

### Etat de la technique

Les caractéristiques énergétiques du zinc (820 Ah/kg, 5845 Ah/l), son électronégativité (1,65V), son faible coût et sa facilité à être recyclé, en font un matériau d'anode de générateur électrochimique particulièrement intéressant : ainsi, les énergies massiques théoriques des couples nickel-zinc et zinc-air sont respectivement de 334 Wh/kg et 1.320 Wh/kg. En pratique, l'énergie massique des accumulateurs nickel-zinc peut atteindre 80 Wh/kg en format prismatique, soit deux à trois fois celle des accumulateurs au plomb.

Toutefois, si le zinc trouve une utilisation massive dans les piles alcalines et les piles Leclanché^{®}, il est absent des accumulateurs alcalins de format industriel, à l'exception des batteries argent-zinc dont l'usage se limite à quelques cycles, et qui sont utilisées principalement pour des applications militaires, et plus récemment des premiers accumulateurs industriels nickel-zinc.

Le zinc est soluble en milieu alcalin sous forme de zincates et forme aisément, lors de la charge des accumulateurs à anode de zinc, des croissances dendritiques qui sont à l'origine de courts-circuits entre les électrodes de polarités opposées.

En outre, les zones de l'électrode négative où se dépose le zinc évoluent au cours des cycles de charge et de décharge : ainsi, on observe des phénomènes de densification qui réduisent la porosité de l'électrode et par conséquent sa capacité à fonctionner à des densités de courant correspondant à un usage pratique des batteries. D'autres facteurs pénalisent l'anode de zinc, tels que la précipitation d'oxyde de zinc qui forme une couche qui passive et réduit la surface active de l'électrode.

De nombreux travaux ont été menés pour comprendre les mécanismes de dépôt et de dissolution du zinc en milieu alcalin et un grand nombre de brevets proposant des solutions diverses ont été déposés :
- l'usage d'additifs ajoutés à l'électrolyte ou incorporés dans la matière active anodique, avec l'objectif de réduire la solubilité des zincates constitue l'objet de l'essentiel des brevets ;
- sont également décrits des procédés mécaniques qui permettent de faire circuler l'électrolyte seul ou une électrode de zinc dispersée dans l'électrolyte, pour éviter les croissances dendritiques en assurant un dépôt de zinc homogène ;
- l'utilisation de courants pulsés, sans ou avec inversion de polarité, permettant de dissoudre au moins partiellement les dendrites ;
- enfin, l'emploi de séparateurs qui limitent la formation ou suppriment la diffusion des ions zincates de l'anode vers la cathode : ce sont par exemple des séparateurs microporeux en couches multiples ou des membranes échangeuses.

Ces diverses techniques peuvent être mises en œuvre isolément ou en combinaison, mais elles n'apportent qu'une partie de la solution, et selon les cas augmentent la résistance interne, renchérissent le coût de la batterie, ou sont complexes à mettre en œuvre. Par ailleurs, certaines recommandent l'addition de plomb ou de cadmium à la masse active de l'anode, ce qui n'est guère acceptable pour des raisons évidentes de pollution.

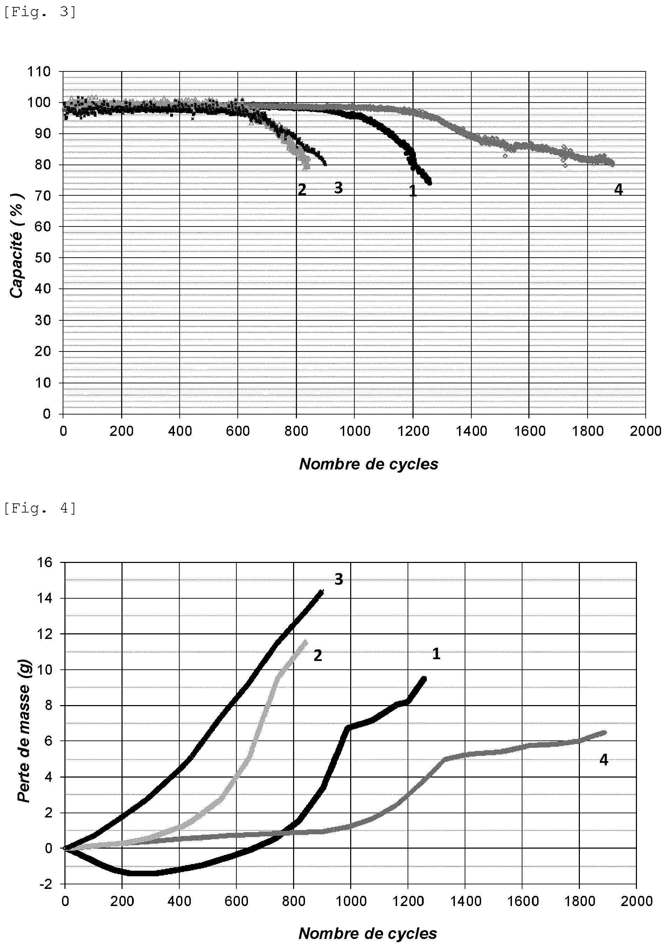

Des progrès ont été réalisés en ajoutant des additifs à l'électrolyte constitué principalement de potasse, comme c'est le cas des petits accumulateurs cylindriques nickel-zinc (NiZn) disponibles sur le marché. Néanmoins, le nombre de cycles obtenus ne répond pas aux besoins d'usage des batteries industrielles, qui doivent au moins assurer 1.000 cycles de charges et décharges profondes, correspondant à 80% de profondeur de décharge et plus. Une avancée singulière a été apportée par l'addition de céramiques conductrices, préférentiellement de nitrure de titane (TiN), à l'électrode de zinc, innovation décrite par le brevet FR 2 788 887 (SCPS) du 27 janvier 1999 permettant de dépasser 1.000 cycles à 80% de profondeur de décharge et au-delà, comme le montre sur la figure 3 l'élément 1. La perte de capacité des accumulateurs NiZn en cyclage est corrélée principalement d'une part à la redistribution et densification locale de la matière active et d'autre part à l'assèchement et par voie de conséquence à la passivation des électrodes de zinc.

Le document FR 2 828 336 A1 décrit également des générateurs électrochimiques secondaires alcalins à anode de zinc, dont l'anode comprend au moins une céramique conductrice et l'électrolyte est constitué d'une solution alcaline fortement concentrée.

L'objet de la présente invention est d'apporter une réponse nouvelle aux limites d'aptitude de l'électrode de zinc contenant une céramique conductrice à fournir un grand nombre de cycles, réponse apportée en modifiant les conditions de recombinaison de l'oxygène à la surface du zinc, c'est à dire en ralentissant considérablement les effets de la passivation du zinc en surface de l'anode et de l'assèchement du générateur, tout en conservant la suppression de la formation de dendrites et la réduction de la redistribution et de la densification du zinc.

Pour ce faire, de manière tout à fait remarquable et en opposition avec les observations antérieurement décrites, l'auteur de la présente invention a montré qu'appliqué à un générateur comportant une telle anode, un ajout de silicates à un électrolyte alcalin permettait de fortement réduire les phénomènes de passivation des électrodes de zinc et d'assèchement du générateur, et par voie de conséquence d'accroître la durée de vie en cyclage du système.

L'examen de l'état de l'art des systèmes à anode de zinc montre qu'il existe plusieurs brevets et études mentionnant l'emploi de silicates. L'addition de silicates présente selon ces documents des résultats très différents si l'électrolyte est mis en œuvre en quantité restreinte et non mobile, ou en grande quantité et/ou en mouvement/circulation dans le générateur.

L'addition de silicates est connue depuis très longtemps, comme le démontre le brevet US No 858 862 de Thomas Edison du 2 juillet 1907 relatif au système de Lalande (ZnCuO) qui décrit la dissolution accrue du zinc pour un électrolyte contenant des silicates.

Le brevet US 3 466 195 A (ESB Inc.) délivré le 9 septembre 1969, mentionne une augmentation de la capacité initiale et de la stabilité de la capacité durant le stockage ou vie calendaire des systèmes primaires ZnAgO ou ZnMnO₂ pour une addition somme toute relativement faible de 0,05% de silicates dans l'électrolyte ou l'électrode positive. Il est signalé par les auteurs de ce brevet que les silicates présentent cependant l'inconvénient d'augmenter l'impédance et que par voie de conséquence la quantité de silicates dans l'électrolyte devrait être maintenue à la quantité minimum nécessaire pour induire l'amélioration recherchée. Ce brevet signale également un effet négatif pour des additions de silicates à 3%.

Marshall et al. (Surface technology 5 (1977) 149 - 163) ont étudié l'influence du silicate de potassium sur la réaction de dissolution du zinc polycristallin dans une solution d'hydroxyde de potassium. Des preuves sont présentées confirmant les conclusions que le silicate de potassium est fortement adsorbé sur le zinc métallique à des potentiels proches du potentiel de dissolution. Il en résulte une inhibition de la dissolution du zinc car l'interaction de OH⁻ avec la surface du métal est restreinte. La couche de silicate adsorbée affecte également le mouvement des espèces ioniques à proximité immédiate de la surface de l'électrode. La quantité de charge nécessaire pour provoquer la passivation est alors réduite indiquant donc que les silicates favorisent la passivation du zinc.

Dans le brevet EP 1 819 002 A2 (Powergenix System Inc.) du 15 août 2007, il est également mentionné que le silicate est susceptible de limiter la solubilité du zinc.

Dans le brevet CN 103794824B B (Hunan science and technology res and dev) du 20 janvier 2016, est mentionnée la préparation d'un gel d'électrolyte de KOH 5.5-6.5 mol/l caractérisé par l'addition de silicates selon un ratio massique de 0.3-0.5 :1 pour résoudre les problèmes de cyclage de cellule nickel-zinc. Il est également mentionné que ce gel permet de réduire la formation de dendrites et la dissolution d'une plaque d'électrode de zinc, ce dernier point étant en accord avec l'étude de Marshall et al. L'addition de silicate est réalisée à partir de silicate de lithium magnésium ou aluminium magnésium qui conduit à la formation d'un gel caractérisé par des particules de silicates de 10-200 nm. La concentration en silicate est donc plus faible et non précisée, l'électrolyte étant le résultat d'une dissolution partielle de particules solides à base de silicates.

Dans le brevet FR 2 630 862 (Sorapec SA) publié le 3 novembre 1989, l'addition de silicates dans un électrolyte de 8M KOH est mentionnée entre 1% et 5%. L'électrolyte est en quantité abondante, telle qu'à l'état oxydé (complète décharge du zinc) le zinc se trouve majoritairement à l'état de zincates dans l'électrolyte.

L'effet bénéfique du silicate dans certaines applications de stockage d'énergie est un phénomène de plus grande dissolution du zinc sous la forme de zincates, cas du brevet FR 2 630 862 ci-dessus mais également des systèmes à circulation zinc-air, ci-dessous. Il est notamment utilisé dans les systèmes zinc-air à circulation d'électrolyte ou à circulation d'électrode de zinc sous forme dispersée dans l'électrolyte, afin d'accroître la quantité de zinc dissoute dans l'électrolyte alcalin, ce qui est nécessaire pour d'augmenter les énergies massique et volumique du système.

De fait, A. Gordon Briggs et al. (J. Chem. Soc., Faraday Trans. 2, 1974, 70, 1978-1990) montrent que l'ajout de silicate de potassium à raison de 0,15 mol/l (soit l'équivalent de 9 g/l de silice) permet de dissoudre par voie électrochimique dans une solution de potasse de 10 mol/l, 30% de plus de zinc qu'en l'absence de silicate. Ils observent également que la stabilité dans le temps des solutions sursaturées (c'est-à-dire l'absence de précipitation d'oxyde de zinc) est beaucoup plus importante en présence de silicate.

P.C. Foller (J. Appl. Electrochem. 16, 1986, 527) décrit un système zinc-air utilisant une électrode de zinc dispersée. De 25 g/l à 28 g/l de silice sont utilisés dans une solution de potasse de 12 mol/l. En présence de silicate, la durée de la décharge du zinc pour un même volume d'électrolyte est multipliée par deux, ce qui correspond ici encore à un effet d'accroissement de la solubilité du zinc. Il est intéressant de noter qu'en 1907 Thomas Edison signalait déjà cette même multiplication par 2. La solution sans silicate présente un précipité blanc d'oxyde de zinc, alors que celle avec silicate a une couleur sombre, liée selon l'auteur à la formation d'un quasi-colloïde. A 30 g/l de silice, l'effet des silicates devient négatif à cause d'une forte augmentation de la viscosité et à la suite du dépôt de silice passivant la surface du zinc ce qui fait diminuer la quantité déchargée. La même composition d'électrolyte est également utilisée dans brevet US 5 006 424 (Univ California) du 9 avril 1991 pour une batterie Zinc-Air avec un lit de particules de zinc.

Dans le même esprit, le brevet FR 2 214 977 (Shell Int Research) du 19 août 1974, mentionne qu'afin d'augmenter la quantité d'ion zincate qui peut se dissoudre dans des solutions caustiques d'électrolyte qui se situent entre 5 à 7 mol/l, avant que l'oxyde de zinc ne commence à précipiter, il a été suggéré d'ajouter des ions silicates aux solutions d'électrolyte. Ce brevet revendique un électrolyte 2 à 4,75 mol/l de KOH et 9 à 36 ions-grammes/l soit 5,86-23,5 g/l de SiO₂. Les auteurs mentionnent que cet électrolyte limite la passivation de l'électrode de zinc pour les systèmes primaires. Pour des cellules secondaires, utilisant particulièrement des électrodes microporeuses, il est proposé un emprisonnement de l'oxyde de zinc dans les pores de l'électrode qui résiste alors à la croissance dendritique et aux variations de forme pendant la recharge améliorant la durée de vie. Pour les systèmes utilisant le zinc métallique comme électrode sous la forme d'une suspension dans l'électrolyte, la passivation est retardée ou empêchée. Il est mentionné que des concentrations d'ions silicates supérieures à 23 ions-gramme/l ou 15 g/l de SiO₂ ne donnent aucun effet avantageux.

Le brevet US 4 147 839 (Diamond Shamrock Corp.) délivré le 3 avril 1979 revendique l'utilisation d'un électrolyte à 45% KOH contenant 54 g/l de silicate de potassium caractérisé par un ratio de K₂O et SiO₂ de 1 :2.2, équivalent donc à 37 g/l de SiO₂. Le domaine d'application est ici très particulier. Ce brevet US 4 147 839 est appliqué à une électrode de zinc négative formée d'une couche de métal actif en suspension dans un électrolyte et d'un collecteur de courant, le principe recherché étant de permettre une dissolution totale de tous les produits de réaction lors de la décharge et une action inverse lors de la recharge. Le bénéfice des silicates est une fois encore d'augmenter la dissolution des produits de réaction, comme cela est également recherché dans le brevet FR 2 214 977.

Enfin, l'effet des silicates sur la corrosion du zinc a été étudié par J.Y Huot (J. Appl. Electrochem. 22, 1992, 443). Il montre que les silicates, à raison de 2 g/l de silice, ralentissent la corrosion de la poudre de zinc en milieu alcalin, mais que cet effet est moindre dès lors que du zincate est présent dans la solution.

Hormis cette recherche de réduction de la corrosion du zinc en milieu alcalin décrite par J. Y. Huot, l'ensemble des documents analysés relatifs à l'utilisation de silicates montre que l'action de ceux-ci vise à augmenter la solubilité du zinc, tout en relevant un effet négatif d'augmentation de la passivation, notamment pour des concentrations élevées de silicates.

Un accroissement de la solubilité du zinc peut être logiquement recherché pour les systèmes à circulation d'électrolyte ou à électrode de zinc dispersée dans un électrolyte en circulation.

Mais pour tout générateur secondaire à volume d'électrolyte plus ou moins restreint et à anode massive, l'utilisation de silicates n'apparaît logiquement pas appropriée. En effet, dans de telles configurations une dissolution importante du zinc en décharges engendre lors des recharges successives des phénomènes croissants de redistribution du zinc entre les anodes et au sein de chacune d'elles, et de constitution en leur sein de zones de densification. Ces évolutions, qui amputent progressivement la capacité utile des anodes, accélèrent de surcroît le déséquilibre de l'état de charge des cathodes.

Ces dérèglements ont été mis en évidence, notamment en accumulateur nickel-zinc, par les travaux de Z. P. Arkhangel'skaya et al. (Russ. J. Appl. Chem. 70, n°1 1997, 68). L'objectif poursuivi dans ces configurations de générateurs est au contraire bien plutôt de réduire la solubilité du zinc, afin de limiter sa redistribution lors des recharges, comme le revendique par exemple la demande de brevet US 5 556 720 (Charkey) publiée le 17 septembre 1996.

L'analyse des documents de l'état de l'art, brevets et études décrivant des batteries alcalines dans lesquelles les silicates sont employés, met donc en évidence l'exploitation de l'aptitude des silicates à augmenter la solubilité du zinc en milieu alcalin. Aucun de ces documents ne mentionne ni ne recherche une amélioration de la stabilité et de la durée de vie en cyclage de la batterie qui résulterait d'une action conjuguée avec une céramique conductrice, préférentiellement le nitrure de titane, permettant de limiter l'assèchement de la batterie et la passivation des électrodes de zinc.

### Exposé sommaire de l'invention

L'objectif visé a été de rechercher les moyens propres à éviter l'assèchement des accumulateurs et la densification des électrodes de zinc. A cette fin, les différents paramètres agissant sur la stabilité de l'électrode de zinc lors des recharges de l'accumulateur ont été étudiés.

Ainsi il a été démontré que 2 paramètres particuliers avaient une influence bénéfique : l'addition de certaines céramiques conductrices, en particulier le TiN, à l'anode de zinc, et l'addition de silicates dans l'électrolyte, voir figure 3, respectivement éléments 1 et 2. L'addition séparée de ces composants permet d'obtenir des résultats intéressants mais l'addition de céramique, que décrit le brevet FR 2 788 887, est plus largement bénéfique que l'addition isolée de silicates dans l'électrolyte. Ces 2 composants, céramique conductrice et silicates, permettent chacun d'obtenir la suppression de la formation de dendrites de zinc et un recul de la densification des électrodes de zinc. La chute de la capacité finalement observée est corrélée à des mécanismes différents, l'assèchement de l'accumulateur pour les céramiques conductrices et la passivation des électrodes de zinc pour les silicates, les additions de silicates étant ici de 45 g/l équivalent de SiO₂, bien au-dessus des 30 g/l signalés par P.C. Foller.

Les travaux d'expérimentation qui ont été conduits ont permis de mettre en évidence que l'utilisation concomitante de ces deux composants améliore nettement le bénéfice obtenu par l'action isolée de chacun. Le mécanisme à l'origine de ce résultat est également nouveau puisqu'il a été corrélé à une amélioration de la recombinaison de l'oxygène sur la céramique conductrice obtenue qui n'est pas limitée par la passivation des électrodes de zinc : c'est-à-dire que l'on réalise un double recul d'une part des effets négatifs et d'autre part des limites de l'action positive, de chaque composant utilisé séparément.

L'invention a donc pour objet les générateurs électrochimiques alcalins rechargeables à anode de zinc comportant des céramiques conductrices, dont l'électrolyte aqueux alcalin de molarité comprise entre 4 M et 15 M d'anions hydroxyles, contient des silicates dans des concentrations exprimées en silice (SiO₂) comprises entre environ 0,15 g/l et 80 g/l.

Plus précisément, l'invention concerne un générateur électrochimique conforme au point 1 suivant :
1.- Générateur électrochimique secondaire à électrode de zinc caractérisé en ce qu'il comprend :
   a) un électrolyte qui est une solution aqueuse alcaline dont la molarité est comprise entre 4 M et 15 M d'anions hydroxyles, comprenant des silicates solubles dont la concentration exprimée en silice (SiO₂) est comprise entre 0,15 g/l et 80 g/l ; et
   b) une électrode de zinc contenant une céramique conductrice au moins en partie constituée de
      nitrure et/ou carbure de hafnium et/ou carbure et/ou nitrure et/ou siliciure de magnésium et/ou carbure et/ou nitrure de niobium et/ou carbure et/ou nitrure et/ou siliciure de titane et/ou nitrure de vanadium et/ou
      de carbures et/ou nitrures doubles de deux métaux quelconques choisis parmi le hafnium, le magnésium, le niobium, le titane et le vanadium.
      Des caractéristiques avantageuses du générateur électrochimique du point 1 précité sont indiquées aux points 2 à 8 suivants :
2.- Générateur électrochimique selon le point 1, dans lequel la céramique conductrice contenue dans l'électrode de zinc comprend du nitrure de titane.
3.- Générateur électrochimique secondaire selon le point 1 ou 2, dans lequel la molarité de la solution alcaline est comprise entre 7 et 13 M.
4.- Générateur électrochimique secondaire selon l'un des points 1 à 3, dans lequel la concentration des silicates dans l'électrolyte, exprimée en silice, est comprise entre 20 g/l et 60 g/l.
5.- Générateur électrochimique secondaire selon l'un des points 1 à 4, dans lequel l'alcalinité de la solution d'électrolyte est apportée par des hydroxydes de lithium, de sodium ou de potassium pris seuls ou en mélange.
6.- Générateur électrochimique secondaire selon l'un des points 1 à 5, dans lequel les silicates sont apportés par de la silice, de la silice pyrogénée, de la fumée de silice, des silicates de potassium ou de sodium, des di-silicates de potassium et de sodium, des méta-silicates de potassium et de sodium, du tétra-silicate de potassium et de l'ortho-silicate de sodium, ces silicates étant utilisés seuls ou en mélange.
7.- Générateur électrochimique secondaire selon l'un des points 1 à 6, dans lequel l'électrolyte contient en outre des zincates.
8.- Générateur électrochimique secondaire selon l'un des points 1 à 7, dans lequel l'électrolyte contient en outre des borates, des phosphates et/ou des fluorures.

D'autres caractéristiques et avantages de l'invention vont maintenant être décrits en détail dans l'exposé suivant qui est donné en référence aux figures annexées, lesquelles représentent schématiquement :
[Fig. 1] : tension de charge et de décharge d'éléments NiZn de 4,6 Ah en fonction du pourcentage de la capacité nominale C= 4,6 Ah d'éléments A et B ;
[Fig. 2] : tension et pression des éléments NiZn C et D de 3Ah avec ou sans silicates pour 3 cycles de formation ;
[Fig. 3] : courbes des capacités mesurées en décharge d'éléments NiZn 8 Ah en cyclage (charge 8 A en 1heure, décharge 8 A, 1 V, profondeur de décharge 100 %)
   1 : anode avec TiN et électrolyte sans silicate,
   2 : anode sans TiN et électrolyte avec silicate,
   3 : anode avec TiO₂ et électrolyte avec silicate,
   4 : anode avec TiN et électrolyte avec silicate ;
[Fig. 4] : pertes de masse cumulées en cyclage des éléments NiZn 8 Ah de la figure 3,
   1 : anode avec TiN et électrolyte sans silicate,
   2 : anode sans TiN et électrolyte avec silicate,
   3 : anode avec TiO₂ et électrolyte avec silicate,
   4 : anode avec TiN et électrolyte avec silicate ;
[Fig. 5] : courbes des capacités mesurées en décharge d'éléments NiZn 8 Ah en cyclage (charge 8 A en 1heure, décharge 8A, 1V, profondeur de décharge 100%),
   5 : anode sans TiN et électrolyte avec silicate,
   6 : anode avec TiN et électrolyte sans silicate,
   7 : anode avec TiN et électrolyte avec silicate ;
[Fig. 6] : pertes de masse cumulées en cyclage des éléments NiZn 8Ah de la figure 5,
   5 : anode sans TiN et électrolyte avec silicate,
   6 : anode avec TiN et électrolyte sans silicate,
   7 : anode avec TiN et électrolyte avec silicate ; et
[Fig. 7] : courbes des capacités mesurées en décharge d'éléments NiZn 8 Ah en cyclage (charge 8A en 1heure, décharge 8 A, 1 V, profondeur de décharge 100%)
   8 : anode avec TiN et électrolyte sans silicate,
   9 : anode avec TiN et électrolyte avec silicate à 0,45 M,
   10 : anode avec TiN et électrolyte avec silicate à 0,85 M.

### Exposé détaillé de l'invention

L'accumulateur à anode de zinc est réalisé selon les méthodes connues de l'homme de l'art. Les électrodes sont sous forme de plaques, constituées d'un collecteur de courant et d'une masse active. La masse active peut incorporer des composés qui n'interviennent pas dans la réaction électrochimique, mais vont assurer par exemple une fonction de conduction électronique ou une liaison mécanique entre la matière active et le collecteur, ou encore une fonction de rétention d'un produit de la réaction électrochimique.

Dans le cas de l'anode de zinc, outre les polymères tels que PTFE, polyéthylène glycol, alcool polyvinylique, caoutchouc styrène-butadiène, carboxyméthyl cellulose..., qui assurent la fonction de liant des constituants de l'électrode, de l'hydroxyde de calcium peut être utilisé pour limiter la formation de zincates solubles, ainsi que des céramiques conductrices comme décrit dans le brevet FR 2 788 887.

Un séparateur isole les compartiments anodiques et cathodiques : c'est un feutre, une membrane poreuse ou échangeuse d'ions, feutre et membrane poreuse pouvant être associés.

Selon le mode de fabrication, l'accumulateur à anode de zinc peut être de format prismatique, cylindrique, ou se présenter sous forme d'une cellule de type filtre-presse si la batterie est de type bipolaire.

La présente invention est notamment, et de manière non limitative, applicable à la fabrication d'un accumulateur nickel-zinc, conçu selon les caractéristiques principales décrites ci-après.

Selon un mode préférentiel de réalisation, on réalise un accumulateur nickel-zinc en associant une électrode de nickel de type plastifié et une électrode de zinc contenant également un liant organique.

### 1) Electrode de nickel

L'électrode de nickel peut être avantageusement réalisée en utilisant une mousse métallique de nickel à pores très fins. Certaines de ces mousses sont désignées comme "battery grade". Les fournisseurs en sont par exemple la société Sumitomo Electric (Japon) et la société Corun (Chine). L'épaisseur de la mousse est choisie en fonction de la capacité surfacique souhaitée de l'électrode de nickel : elle est généralement comprise entre 1,2 et 2 mm, mais elle peut être laminée pour ajuster précisément l'épaisseur à la capacité surfacique souhaitée.

La matière active est constituée d'hydroxyde de nickel qui contient de préférence du zinc et du cobalt co-précipités. Les particules sont préférentiellement de forme sphérique ou sphéroïdale pour augmenter la capacité volumique. Elles peuvent être recouvertes d'oxyde et d'hydroxyde de cobalt qui, lors de la formation de l'accumulateur, se transforment en oxy-hydroxyde de cobalt conducteur (Oshitani et al. J. Electrochem. Soc. 1989 136, 6, 1590).

On peut également ajouter à la poudre d'hydroxyde de nickel des additifs conducteurs (fibres, poudres métalliques).

Une pâte est préparée en mélangeant les constituants décrits ci-dessus et de l'eau permutée dans laquelle a été ajoutée de la carboxyméthyl cellulose. Un liant polymère, comme le PTFE, peutêtre ajouté à ce stade de la fabrication sous forme de suspension, ou ultérieurement après avoir rempli ou recouvert le collecteur, en particulier la mousse de nickel, avec la pâte active par trempage dans la suspension.

Le remplissage de la mousse de nickel s'effectue à l'échelle du laboratoire à l'aide d'une racle qui fait pénétrer la pâte dans l'épaisseur du support, et à l'échelle industrielle par injection sous pression de la pâte dans la mousse.

Après séchage, l'électrode est comprimée afin d'assurer la cohésion entre collecteur, matière active et additifs et découpée aux dimensions souhaitées.

### 2) Electrode de zinc

Le collecteur de l'électrode de zinc peut se présenter sous forme de feuillard métallique perforé, de toile tissée, de feuillard expansé ou de mousse métallique. Le cuivre peut être préféré en raison de sa conductivité, mais doit être recouvert d'un métal protecteur : zinc, étain, ou alliage.

L'électrode de zinc est fabriquée en préparant au préalable une pâte constituée d'oxyde de zinc et d'additifs divers :
- des conducteurs électroniques : zinc métallique, carbone, cuivre, céramiques conductrices ..., sous forme de poudres ou de filaments.
- des agents anti-corrosion : indium, bismuth ...
- des composés qui réagissent avec les zincates : hydroxydes de calcium, de baryum ...

La phase liquide est de l'eau permutée ou de l'alcool, dans lequel/laquelle a été ajoutée de la carboxyméthyl-cellulose comme liant et épaississant. D'autres liants peuvent être ajoutés comme ceux mentionnés dans le brevet EP 1 715 536.

Il est possible, en fonction de la technique choisie, de préparer une pâte à forte viscosité qui peut être appliquée par pression sur les deux faces du support métallique pour constituer une structure "sandwich", ou d'élaborer une pâte de moyenne viscosité dans laquelle le collecteur est plongé, puis en est ressorti en éliminant l'excès de pâte pour ajuster l'épaisseur de l'électrode à l'aide d'une racle, opération qui est suivie d'un séchage. Enfin, il est possible d'utiliser une poudre sèche mélangée à un liant et de la comprimer sur le support métallique pour constituer l'électrode.

### 3) L'électrolyte

L'électrolyte mis en œuvre, dans lequel sont apportés les silicates, est de préférence une solution concentrée alcaline dont la molarité est comprise entre 4 et 12 M (4 et 12 moles/l) d'anions hydroxyles. L'alcalinité est apportée par des hydroxydes de potassium, sodium et lithium, pris individuellement ou en mélange.

La quantité de silicates ajoutés à l'électrolyte, et exprimée en masse de silice par litre, est comprise entre 0,15 et 80 g/l et de préférence entre 20 et 60 g/l. L'électrolyte peut également contenir des zincates dans des proportions variables.

Les silicates sont notamment apportés par de la silice, de la silice pyrogénée, de la fumée de silice ou des silicates de potassium et de sodium, tels que di-silicates de potassium et de sodium, des méta-silicates de potassium et de sodium, du tétra-silicate de potassium, de l'ortho-silicate de sodium. Ces silicates peuvent être utilisés seuls ou en mélanges. L'électrolyte peut également contenir des borates, des phosphates, et des fluorures, pris seuls ou en mélange, comme décrit par exemple dans le brevet US 5 215 836.

### Procédés de recombinaison de l'oxygène

Afin d'expliciter la démarche qui a été suivie pour aboutir à la présente invention, on décrira dans un premier temps l'analyse de la perte de masse et de la recombinaison de l'oxygène d'éléments NiZn.

La charge des électrodes de nickel est caractérisée par une réaction parasite d'évolution d'oxygène, qui intervient quelque peu avant d'atteindre la charge complète des électrodes de nickel. Pour limiter l'assèchement des accumulateurs résultant de l'expulsion de l'oxygène en dehors de l'accumulateur via la soupape d'étanchéité, il est souhaitable de recombiner l'oxygène à l'intérieur de l'accumulateur afin de limiter la chute de la capacité. La recombinaison de l'oxygène à la surface de l'électrode de zinc peut procéder suivant deux mécanismes :
(1) une oxydation chimique exprimée par la réaction 2Zn + O₂ +2H₂O → 2Zn(OH)₂, et
(2) une réduction catalytique sur une zone conductrice, comme le zinc métal ou le nitrure de titane, exprimée par les réactions : O₂ + 2H₂O + 4 e- → 4OH- et/ou O₂ +H₂O+2e- → HO₂⁻ + OH⁻ (en charge uniquement).

Ces deux mécanismes réactionnels, pour être performants, nécessitent des points de triple contact de phases, solide - liquide - gaz, le gaz étant l'oxygène à la surface des électrodes de zinc. L'accès de l'oxygène à la surface des électrodes de zinc est donc un paramètre déterminant pour assurer la recombinaison. Différentes barrières peuvent limiter l'accès de l'oxygène à la surface des anodes de zinc. Classées de la plus limitante à la moins limitante, elles ont la particularité d'être d'états physiques différents : la phase liquide est l'électrolyte à cette surface; la phase solide est le séparateur poreux placé à la surface de l'électrode de zinc; la phase gazeuse est constituée par l'hydrogène généré à la surface de ladite anode. Cette évolution d'hydrogène représente une gêne par un effet indirect en augmentant la quantité d'électrolyte à l'interface quand le niveau de l'électrolyte est faible.

Deux éléments NiZn A et B de capacité nominale 4,6 Ah sont confectionnés selon la description générale donnée ci-dessus et en utilisant des compositions identiques d'électrodes et d'électrolyte. L'électrolyte utilisé est une solution concentrée alcaline de KOH dont la molarité est 10 M d'anions hydroxyles sans addition de silicates.

Le nitrure de titane est introduit de manière homogène dans la masse active de l'anode de zinc pour l'élément A. Pour l'élément B, la même quantité de TiN est préférentiellement déposée à la surface des électrodes de zinc. Les éléments sont étanches, équipés d'une soupape s'ouvrant aux pressions supérieures à 2 bars.

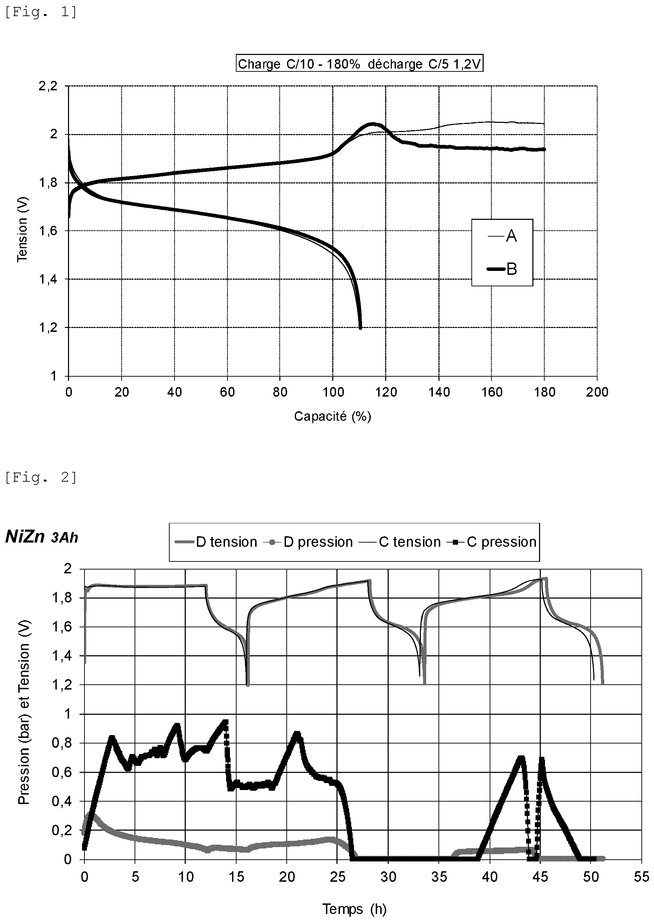

Les éléments A et B sont chargés au régime de C/10 entre 100% et 180% d'état de charge, puis déchargés à C/5 avec une tension d'arrêt de 1,2 V, tableau 1 et figure 1 pour l'exemple à 180% de charge. Les pertes de masses (ΔM) des éléments sont mesurées et un taux de recombinaison des gaz (TRG) est calculé en convertissant la différence d'ampère-heure entre la charge et la décharge en masse d'eau potentiellement perdue, tableau 1 ci-dessous.

Pour l'élément A, le taux de recombinaison des gaz diminue au fur et à mesure qu'augmente l'état de charge. Ce comportement n'est pas vérifié pour l'élément B qui est caractérisé par une perte de masse globale deux fois plus faible et un taux de recombinaison des gaz en hausse à 180% d'état de charge par rapport à celui calculé à 140%.

Ce résultat correspond à une activité catalytique renforcée du TiN vis-à-vis de l'oxygène, selon le procédé (2), ce que l'on a cherché ici à mettre en évidence en montrant l'accentuation du phénomène lorsque le TiN est principalement situé en surface de l'anode, donc en plus grande quantité à sa surface, par rapport au cas où la même quantité globale en est répartie dans tout le volume anodique.

La présente invention a pour but de renforcer l'activité catalytique du TiN sur la recombinaison de l'oxygène afin de repousser les mécanismes de passivation de l'électrode négative et d'assèchement des éléments à anode de zinc.

**Tableau 1**

| Elément | Charge | Charge | Décharge | Déch. | ΔM | TRG |
|---|---|---|---|---|---|---|
| NiZn | (%) | (Ah) | (Ah) | (%) | (g) | (%) |
| **A** (TiN dans l'épaisseur) | 100% | 4,603 | 4,497 | 97,7% | 0,01 | 72% |
| | 120% | 5,524 | 4,953 | 107,7% | 0,12 | 38% |
| | 140% | 6,444 | 4,999 | 108,6% | 0,37 | 24% |
| | 180% | 8,285 | 5,066 | 110,1% | 0,87 | 20% |
| | | | | ΣΔM : 1,37 | | |
| **B** (TiN en surface) | 100% | 4,601 | 4,469 | 97,1% | 0,00 | 100% |
| | 120% | 5,524 | 4,992 | 108,5% | 0,05 | 72% |
| | 140% | 6,444 | 5,100 | 110,8% | 0,24 | 47% |
| | 180% | 8,282 | 5,085 | 110,5% | 0,33 | 69% |
| | | | | ΣΔM : 0,62 | | |

Cherchant à définir des modes de réalisation nouveaux de nature à repousser les mécanismes de passivation de l'électrode négative et d'assèchement du générateur selon la présente invention, son auteur a procédé à une expérimentation comparée conduite sur des éléments NiZn C et D de 3Ah identiques - hors électrolyte - réalisés suivant la description générale précédemment fournie. Leurs anodes de zinc comportent du TiN.

L'électrolyte utilisé est une solution concentrée alcaline dont la molarité est 10 M d'anions hydroxyles pour l'élément C. L'électrolyte est modifié pour l'élément D avec une addition de silicates à 0,82 M, apportée par de la silice.

La pression interne des éléments est mesurée à l'aide d'un capteur de pression 0-10bars, les éléments étant montés avec une soupape de sécurité qui s'ouvre pour des pressions supérieures à environ 0,85 bar.

La formation initiale des 2 éléments est réalisée par 3 cycles avec des charges au régime de C/10 pendant 12h et des décharges au régime de C/5 jusqu'à une tension d'arrêt de la décharge de 1, 2V.

La tension et la pression des éléments C et D sont données pour les 3 cycles sur la figure 2.

La mesure de pression de l'élément D contenant l'électrolyte silicaté est caractérisée par l'absence d'ouvertures de la soupape. A l'inverse, la pression interne de l'élément C, ne contenant pas l'addition de silicates dans l'électrolyte, est caractérisée par des ouvertures de soupape, notamment dans des régions de début de charge impliquant préférentiellement une évolution d'hydrogène à l'électrode de zinc.

Ce résultat démontre que la présence des silicates dans l'électrolyte diminue la formation d'hydrogène et améliore la recombinaison de l'oxygène.

Sans silicates, la faible surtension d'hydrogène du TiN génère une production limitée d'hydrogène au cœur de l'anode poreuse. L'électrolyte contenu dans la porosité des électrodes de zinc est partiellement chassé vers l'interface des électrodes. L'épaisseur du film d'électrolyte à l'interface des électrodes augmente alors, et limite l'accès de l'oxygène aux zones de recombinaison catalytique du TiN. La recombinaison se fait ainsi préférentiellement sur le Zn métal à travers le procédé chimique de recombinaison (1), qui conduit aux phénomènes d'assèchement et passivation par formation de Zn(OH)₂, entraînant une chute progressive de la capacité.

Avec les silicates, la mesure de pression démontre que l'on obtient une réduction sensible de l'évolution d'hydrogène. L'analyse du phénomène permet de concevoir l'hypothèse, sans que celle-ci limite le champ de l'invention ici exposée, selon laquelle en se déposant sur la surface de l'électrode de zinc, les silicates découplent le TiN et le Zn métal, en formant une interface isolante entre les deux, ce qui permet de réduire l'évolution d'hydrogène. L'accès de l'oxygène jusqu'au TiN est ainsi amélioré, permettant une recombinaison s'effectuant alors préférentiellement suivant le procédé catalytique (2), lequel ne conduit pas aux phénomènes d'assèchement et de passivation.

Afin de poursuivre et illustrer la mise en évidence du fonctionnement et la définition de la présente invention, des éléments NiZn 1, 2, 3 et 4 de capacité nominale 8Ah sont réalisés de manière identique, suivant la description générale fournie ci-dessus.

Les éléments sont montés avec une soupape basse pression de 0,2 bar. L'hydroxyde de nickel utilisé pour les cathodes de ces éléments 1 à 4 contient 5% de cobalt. L'électrolyte utilisé est une solution concentrée alcaline dont la molarité est 10M d'anions hydroxyles pour l'élément 1. L'électrolyte est modifié pour les éléments 2, 3 et 4, avec une addition de silicates. Les paramètres qui différentient les éléments 1 à 4 sont résumés au tableau 2, ci-dessous.

**Tableau 2 : Caractéristiques des accumulateurs NiZn, capacité nominale 8Ah, cyclés charge 8A 1h, décharge à 100% 8A 1V.**

| Elément (accumulateur) | TiN dans les anodes de zinc | Silicates dans l'électrolyte | Teneur de Co dans Ni(OH)₂ des cathodes | Nombre de cycles à 90% de capacité résiduelle | Nombre de cycles max |
|---|---|---|---|---|---|
| 5 | Non | 0.45M | 8% | 500 | 500 |
| 2 | Non | 0,75M | 5% | 770 | 830 |
| **3** | Non (avec TiO₂) | 0,75M | 5% | 770 | 900 |
| **1** | Oui | Non | 5% | 1. 120 | 1.330 |
| **6** | Oui | Non | 8% | 1.200 | 1.300 |
| **8** | Oui | Non | 8% | 1. 120 | 1.300 |
| **4** | Oui | 0,45M | 5% | 1.380 | 1.885 |
| **7** | Oui | 0,45M | 8% | 1. 700 | >1.840 |
| **9** | Oui | 0,45M | 8% | 1. 940 | 2.640 |
| **10** | Oui | 0,85M | 8% | 1.740 | 2.680 |

Dans l'élément 3, le nitrure de titane est remplacé par un composé d'oxyde de titane.

Les accumulateurs ont été cyclés à courant constant 8A, équivalent au régime de C, avec une charge d'une heure et une décharge qui se termine quand la tension atteint 1V.

Les capacités déchargées et pertes de masse cumulées en fonction du nombre de cycles pour les accumulateurs 1 à 4 sont comparées respectivement sur les figures 3 et 4.

On constate que la stabilité de la capacité des accumulateurs s'améliore suivant la séquence :
- Addition de silicate seul, accumulateurs 2 et 3 (TiO₂ n'apporte pas l'effet du TiN),
- Addition de TiN seul, accumulateur 1
- Addition de TiN et de silicate, accumulateur 4.

Les résultats sont regroupés au tableau 2. On observe que 90% de la capacité initiale sont maintenus après respectivement 770, 770, 1.120 et 1.380 cycles pour les éléments 2, 3, 1 et 4. Après avoir passé 90% de capacité résiduelle, les capacités des accumulateurs chutent rapidement sauf pour le 4 (TiN et silicates). L'accumulateur 4 (TiN et silicates) conserve plus de 75% de sa capacité initiale après 1.885 cycles soit une amélioration de 50% par rapport à l'accumulateur 1 qui conserve 75% de sa capacité initiale après 1.260 cycles.

Les pertes de masse des accumulateurs 2 (silicates sans TiN) et 3 (silicates et TiO₂) sont les plus fortes, suggérant une recombinaison de l'oxygène insuffisante pour limiter l'assèchement des accumulateurs. On peut y voir une passivation des électrodes de zinc en accord avec l'article de P.C. Foller indiquant que pour des additions en silice supérieures à 28-30 g/l, un dépôt de silice passive la surface du zinc. Ce dépôt limite le pouvoir de recombinaison des électrodes de zinc.

Dans le cadre de la présente invention, l'auteur a par ailleurs mis en évidence que les complexes qui se forment entre ions silicates et zincates en milieu alcalin, en particulier au sein même d'anodes de zinc poreuses, peuvent présenter une stabilité permettant de mesurer une mobilité plus faible, du fait d'une augmentation des effets stériques des zincates complexés par les silicates, que celle des seuls ions zincates plus petits. La limitation de la mobilité des ions zincates par complexation avec les ions silicates constitue un paramètre de nature à contribuer à réduire le phénomène de redistribution et densification du zinc dans les anodes.

La formation de complexes entre ions silicates et zincates en milieu alcalin, mentionnés par plusieurs auteurs, a été décrite par Michel R. Anseau et al. (Inorg. Chem. 44, 8023-8032, 2005) dans des milieux fortement alcalins : les zincates, dans des solutions de potasse ou de soude de 14 à 15 mol/l, réagissent avec des silicates monomériques, dimériques et cyclo-trimériques en formant des composés très stables.

Les pertes de masse des accumulateurs 1 et 4 (avec TiN) sont nettement plus faibles que celles des accumulateurs 2 et 3. Il est intéressant de noter une progressivité différente entre ces deux accumulateurs 1 (avec TiN) et 4 (avec TiN et silicates) :
- de 0 à 900 cycles la perte de masse augmente très modérément et linéairement pour l'accumulateur 4 alors qu'elle accélère dès 300 cycles pour l'accumulateur 1. Ce résultat est en accord avec une amélioration de la stabilité liée à un recul de la densification des électrodes de zinc, comme attendu par la complexation des zincates avec les silicates.
- entre 900 et 1.260 pour l'accumulateur 1 et entre 1.000 et 1.300 pour l'accumulateur 4, la perte de masse augmente fortement à cause d'une évolution d'oxygène en fin de charge de plus en plus importante.
- à partir de 1.200 cycles pour l'accumulateur 1, la perte de masse devient trop importante, impliquant une chute rapide de la capacité à la suite de l'assèchement de l'élément et de la passivation des électrodes.
- l'accumulateur 4 démontre un comportement singulier, caractérisé par une perte globale de masse modérée, avec une évolution de la perte redevenant faible au-delà de 1.300 cycles, en accord avec une recombinaison efficace de l'oxygène limitant durablement son assèchement et la passivation des électrodes.

Ainsi, on constate que l'addition simple de nitrure de titane dans l'anode, accumulateur 1, ou de silicates dans l'électrolyte, accumulateur 2, apporte une réponse satisfaisante à la stabilité de l'électrode de zinc, avec une suppression de la formation dendritique et le recul de la densification de l'électrode de zinc.

L'addition de nitrure de titane est cependant nettement plus performante que l'addition de silicates dans l'électrolyte.

Mais c'est une amélioration très importante du fonctionnement que l'on mesure lors de l'addition concomitante de nitrure de titane à l'électrode de zinc et de silicates à l'électrolyte, (accumulateur 4), ce qui correspond à un pouvoir de recombinaison de l'oxygène au niveau des électrodes de zinc fortement amélioré, repoussant les phénomènes d'assèchement du système et de passivation des électrodes de zinc. Les silicates apportent une action de renforcement, jusqu'ici non identifiée, du pouvoir de réduction catalytique de l'oxygène d'une céramique conductrice telle que le nitrure de titane.

Dans le comparatif qui suit, des accumulateurs NiZn 5, 6 et 7 de capacité nominale 8 Ah sont réalisés de manière identique, suivant la description générale fournie ci-dessus.

Les éléments sont montés avec une soupape basse pression de 0,2 bar.

L'hydroxyde de nickel utilisé pour les cathodes des éléments 5 à 7 contient 8% de cobalt. L'augmentation de la quantité de cobalt renforce la conductivité de l'hydroxyde de nickel. La charge de l'électrode de nickel est alors plus performante, avec une diminution de l'évolution d'oxygène et donc une modération des pertes de masse cumulées.

L'électrolyte utilisé est une solution concentrée alcaline dont la molarité est 10M d'anions hydroxyles pour l'élément 6. L'électrolyte est modifié pour les éléments 5 et 7, avec une addition importante de silicates. Les anodes de l'élément 5 ne contiennent pas de TiN.

Les paramètres qui différentient les éléments 5 à 7 sont résumés au tableau 2 ci-dessus.

Les accumulateurs 5 à 7 ont été cyclés à courant constant 8A, équivalent au régime de C, avec une charge d'une heure et une décharge qui se termine quand la tension atteint 1V.

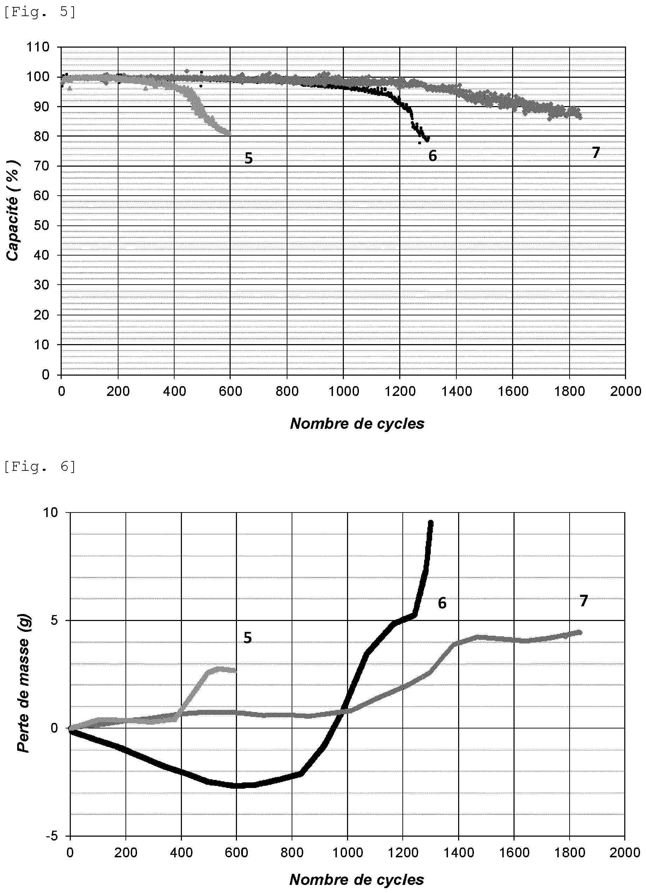

Les capacités déchargées et pertes de masse cumulées en fonction du nombre de cycles pour les accumulateurs 5 à 7 sont comparées respectivement sur les figures 5 et 6.

Les résultats sont regroupés au tableau 2 ci-dessus.

Suivant la séquence sans TiN et avec silicate, accumulateur 5, puis avec TiN et sans silicate, accumulateur 6, et enfin avec TiN et silicate, accumulateur 7, la stabilité de la capacité des accumulateurs s'améliore avec une capacité résiduelle à 90% de leur capacité initiale après respectivement 500, 1.200 et 1.700 cycles, voir tableau 2. Le nombre de cycles est plus faible pour l'accumulateur 5 (0,45M, soit 27g/l de SiO₂) que pour les accumulateurs 2 et 3 (0,75M, soit 45 g/l de SiO₂) suggérant un effet bénéfique pour une addition de silicates supérieure à 30g/l exprimée en SiO₂, à l'inverse de ce qu'indique l'état de l'art qui annonce une baisse de la capacité par passivation à la suite de la précipitation de SiO₂ ou à cause d'un électrolyte trop visqueux (article P.C. Foller).

A 90% de la capacité initiale, l'accumulateur 7 affiche une progression de la stabilité de la capacité de 42% par rapport à l'accumulateur 6. Les évolutions des pertes de masse des accumulateurs 6 et 7 sont similaires à celles des accumulateurs 1 et 4, confirmant le caractère singulier du pouvoir de recombinaison de l'oxygène au sein des accumulateurs combinant le nitrure de titane dans l'électrode de zinc et l'addition de silicate dans l'électrolyte.

Enfin, des éléments NiZn 8, 9, et 10 de capacité nominale 8Ah sont réalisés de manière identique, suivant la description générale donnée ci-dessus.

Les éléments sont montés avec une soupape basse pression de 0,2bar. L'hydroxyde de nickel utilisé pour les cathodes des éléments 8 à 10 est le même que celui des éléments 5 à 7 précédents. Les éléments 8 à 10 ont des électrodes de zinc comportant du nitrure de titane.

Par rapport aux éléments 6 et 7, la préparation de la pâte de masse active de l'électrode de zinc a été modifiée, sans pour autant en changer de composition chimique, selon une procédure permettant d'augmenter l'homogénéité des constituants de cette masse active.

L'électrolyte utilisé est une solution concentrée alcaline dont la molarité est 10M d'anions hydroxyles pour l'élément 8. L'électrolyte est modifié pour les éléments 9 et 10 avec des additions importantes de silicates, respectivement à 0,45M et 0,85M.

Les accumulateurs 8 à 10 ont été cyclés à courant constant 8A, équivalent au régime de C, avec une charge d'une heure et une décharge qui se termine quand la tension atteint 1V.

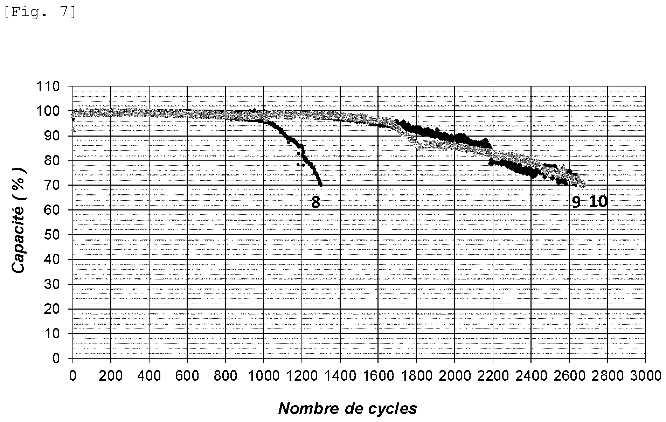

Les capacités déchargées en fonction du nombre de cycles effectués pour les accumulateurs 8 à 10 sont comparées sur la figure 7.

Les résultats sont également regroupés au tableau 2 précédent. L'accumulateur 8 (avec TiN et sans silicates) ne délivre plus que 70 % de sa capacité initiale après 1.300 cycles, alors que l'accumulateur 9 (avec TiN et silicates à 0,45 M) conserve encore 70% de sa capacité initiale après 2.640 cycles, soit une progression de 103%. L'accumulateur 10 (avec TiN et silicates à 0,85 M) conserve encore 70% de sa capacité initiale après 2.680 cycles, soit une progression de 106% par rapport à l'accumulateur 8.

Ces divers résultats démontrent que l'effet obtenu en utilisant concomitamment nitrure de titane dans l'anode et silicates dans l'électrolyte peut être spectaculaire, avec une progression de plus de 100% du nombre de cycles.

Ils traduisent également, comme attendu par l'auteur de la présente invention, un recul de la densification et des changements de forme des électrodes de zinc, liés à la formation des complexes zincates - silicates, qui restreint leur libre parcours moyen dans l'électrolyte, y compris au sein des anodes, et par voie de conséquence réduit la redistribution du zinc.

De plus, la combinaison d'une céramique conductrice, comme le TiN, et des silicates modifie le pouvoir de recombinaison des électrodes de zinc vis-à-vis de l'oxygène, en favorisant la recombinaison de l'oxygène selon le procédé catalytique (2) décrit précédemment.

Les silicates ne passivent plus la surface des électrodes de zinc, comme observé en l'absence de TiN. Ces phénomènes permettent de limiter l'assèchement des accumulateurs et d'augmenter très nettement la durée de vie en cyclage.

Ce sont donc bien des effets nouveaux mesurés lors de l'association d'une céramique conductrice, comme le TiN, dans l'anode de zinc et de silicates dans l'électrolyte qui font l'objet de la présente invention.

Naturellement, et comme il résulte largement de ce qui précède, l'invention n'est pas limitée aux modes de réalisation particuliers qui ont été décrits à titre d'illustration et de démonstration. L'invention ne se limite pas aux modes de réalisation qui en ont été fournis, mais en embrasse toutes les variantes.

## Revendications

1. Générateur électrochimique secondaire à électrode de zinc **caractérisé en ce qu'**il comprend :
a) un électrolyte qui est une solution aqueuse alcaline dont la molarité est comprise entre 4 M et 15 M d'anions hydroxyles, comprenant des silicates solubles dont la concentration exprimée en silice (SiO₂) est comprise entre 0,15 g/l et 80 g/l ; et
b) une électrode de zinc contenant une céramique conductrice au moins en partie constituée de
nitrure et/ou carbure de hafnium et/ou carbure et/ou nitrure et/ou siliciure de magnésium et/ou carbure et/ou nitrure de niobium et/ou carbure et/ou nitrure et/ou siliciure de titane et/ou nitrure de vanadium et/ou
de carbures et/ou nitrures doubles de deux métaux quelconques choisis parmi le hafnium, le magnésium, le niobium, le titane et le vanadium.

2. Générateur électrochimique selon la revendication 1, dans lequel la céramique conductrice contenue dans l'électrode de zinc comprend du nitrure de titane.

3. Générateur électrochimique secondaire selon la revendication 1 ou 2, dans lequel la molarité de la solution alcaline est comprise entre 7 et 13 M.

4. Générateur électrochimique secondaire selon l'une des revendications 1 à 3, dans lequel la concentration des silicates dans l'électrolyte, exprimée en silice, est comprise entre 20 g/l et 60 g/l.

5. Générateur électrochimique secondaire selon l'une des revendications 1 à 4, dans lequel l'alcalinité de la solution d'électrolyte est apportée par des hydroxydes de lithium, de sodium ou de potassium pris seuls ou en mélange.

6. Générateur électrochimique secondaire selon l'une des revendications 1 à 5, dans lequel les silicates sont apportés par de la silice, de la silice pyrogénée, de la fumée de silice, des silicates de potassium ou de sodium, des di-silicates de potassium et de sodium, des méta-silicates de potassium et de sodium, du tétra-silicate de potassium et de l'ortho-silicate de sodium, ces silicates étant utilisés seuls ou en mélange.

7. Générateur électrochimique secondaire selon l'une des revendications 1 à 6, dans lequel l'électrolyte contient en outre des zincates.

8. Générateur électrochimique secondaire selon l'une des revendications 1 à 7, dans lequel l'électrolyte contient en outre des borates, des phosphates et/ou des fluorures.

## Patentansprüche

1. Sekundärer elektrochemischer Generator mit Zinkelektrode, **dadurch gekennzeichnet, dass** er aufweist:
a) einen Elektrolyten, der eine wässrige alkalische Lösung ist, deren Molarität zwischen 4 M und 15 M Hydroxylanionen liegt, umfassend lösliche Silikate, deren Konzentration, ausgedrückt als Siliciumdioxid (SiO2), zwischen 0,15 g/l bis 80 g/l liegt; und
b) eine Zinkelektrode, die eine leitfähige Keramik enthält, die zumindest teilweise aus Hafniumnitrid und/oder -carbid und/oder Magnesiumcarbid und/oder -nitrid und/oder -silicid und/oder Niobcarbid und/oder -nitrid und/oder Titancarbid und/oder -nitrid und/oder -silicid und/oder Vanadiumnitrid und/oder Doppelcarbiden und/oder -nitriden von zwei beliebigen Metallen besteht, die aus Hafnium, Magnesium, Niob, Titan und Vanadium ausgewählt sind.

2. Elektrochemischer Generator nach Anspruch 1, wobei die in der Zinkelektrode enthaltene leitfähige Keramik Titannitrid aufweist.

3. Sekundärer elektrochemischer Generator nach Anspruch 1 oder 2, wobei die Molarität der alkalischen Lösung zwischen 7 und 13 M liegt.

4. Sekundärer elektrochemischer Generator nach einem der Ansprüche 1 bis 3, wobei die Konzentration der Silikate im Elektrolyten, ausgedrückt als Siliciumdioxid, zwischen 20 g/l und 60 g/l liegt.

5. Sekundärer elektrochemischer Generator nach einem der Ansprüche 1 bis 4, wobei die Alkalinität der Elektrolytlösung durch Lithium-, Natrium- oder Kaliumhydroxide allein oder im Gemisch bereitgestellt wird.

6. Sekundärer elektrochemischer Generator nach einem der Ansprüche 1 bis 5, wobei die Silikate durch Siliciumdioxid, pyrogenes Siliciumdioxid, Siliciumdioxidrauch, Kalium- oder Natriumsilikate, Kalium- und Natrium-Disilikate, Kalium- und Natrium-Metasilikate, Kalium-Tetrasilikat und Natrium-Orthosilikat bereitgestellt werden, wobei diese Silikate einzeln oder in Mischungen verwendet werden.

7. Sekundärer elektrochemischer Generator nach einem der Ansprüche 1 bis 6, wobei der Elektrolyt ferner Zinkate enthält.

8. Sekundärer elektrochemischer Generator nach einem der Ansprüche 1 bis 7, wobei der Elektrolyt zusätzlich Borate, Phosphate und/oder Fluoride enthält.

## Claims

1. Secondary electrochemical generator with zinc electrode, **characterised in that** it comprises
a) an electrolyte which is an alkaline aqueous solution with a molarity of between 4 M and 15 M of hydroxyl anions, comprising soluble silicates whose concentration expressed as silica (SiO₂) is between 0.15 g/l and 80 g/l; and
b) a zinc electrode containing a conductive ceramic at least partly consisting of hafnium nitride and/or carbide and/or magnesium carbide and/or nitride and/or silicide and/or niobium carbide and/or nitride and/or titanium carbide and/or nitride and/or silicide and/or vanadium nitride and/or
double carbides and/or nitrides of any two metals selected from hafnium, magnesium, niobium, titanium and vanadium.

2. The electrochemical generator of claim 1, wherein the conductive ceramic contained in the zinc electrode comprises titanium nitride.

3. The secondary electrochemical generator as claimed in claim 1 or 2, wherein the molarity of the alkaline solution is between 7 and 13 M.

4. The secondary electrochemical generator according to any one of claims 1 to 3, wherein the concentration of silicates in the electrolyte, expressed as silica, is between 20 g/l and 60 g/l.

5. The secondary electrochemical generator according to any one of claims 1 to 4, wherein the alkalinity of the electrolyte solution is provided by hydroxides of lithium, sodium or potassium taken alone or in mixture.

6. The secondary electrochemical generator according to any of claims 1 to 5, wherein the silicates are provided by silica, pyrogenic silica, fumed silica, potassium or sodium silicates, potassium and sodium di-silicates, potassium and sodium meta-silicates, potassium tetrasilicate and sodium ortho-silicate, these silicates being used singly or in mixture.

7. The secondary electrochemical generator according to any one of claims 1 to 6, wherein the electrolyte further contains zincates.

8. The secondary electrochemical generator according to any one of claims 1 to 7, wherein the electrolyte further contains borates, phosphates and/or fluorides.
